# EUROPÄISCHE PATENTSCHRIFT

(11) **EP 2 775 363 B1**
(45) Veröffentlichungstag und Bekanntmachung des Hinweises auf die Patenterteilung: **20.12.2017**
(21) Anmeldenummer: 14156787.5
(22) Anmeldetag: 26.02.2014
(51) Int. Cl.: G05B 19/042, G06F 9/455

(54) **Verfahren zur Integration von Anwendungen in eine Steuerung eines Flurförderzeugs**
Method for integrating applications into a control system of an industrial truck
Procédé d'intégration d'applications dans une commande d'un chariot élévateur

(30) Priorität: 04.03.2013 DE 102013102082
(43) Veröffentlichungstag der Anmeldung: 10.09.2014
(73) Patentinhaber: STILL GmbH, 22113 Hamburg (DE)
(72) Erfinder: Krüger-Basjmeleh, Tino, 25469 Halstenbek (DE); Tödter, Joachim, 22391 Hamburg (DE); Viereck, Volker, 23898 Kühsen (DE)
(74) Vertreter: Patentship Patentanwaltsgesellschaft mbH

(56) Entgegenhaltungen:
- EP-A2- 1 136 325
- EP-A2- 1 481 945
- DE-A1- 19 735 319
- US-A- 5 890 086
- US-A1- 2004 133 879

## Beschreibung

Die Erfindung betrifft ein Verfahren zur Integration von mindestens einer Anwendung in eine Steuerung eines Flurförderzeugs. Insbesondere betrifft die Erfindung ein Verfahren zur Integration von mindestens einer Anwendung in eine Steuerung eines Flurförderzeugs, die mindestens einen Steuerungsrechner, der in Wirkverbindung mit Fahrfunktionen und/oder Arbeitsfunktionen und/oder Sensoren des Flurförderzeugs steht, und mindestens einen Anwendungsrechner aufweist, ein Flurförderzeug, auf dem das Verfahren zur Anwendung kommt, und ein System aus einer Mehrzahl von Flurförderzeugen sowie einem Server.

Bei Flurförderzeugen werden in der Regel eine Fahrzeugsteuerung oder mehrere Fahrzeugsteuergeräte eingesetzt, die Mikrocontroller basiert sind und einen Zugriff auf Sensoren, Aktoren für Fahrzeugfunktionen sowie Motoren, bzw. Fahr- und Arbeitsfunktionen des Flurförderzeugs, ermöglichen. Diese Fahrzeugsteuerung bzw. der hierzu eingesetzte Mikrocontroller besitzen zumeist ein einfaches Betriebssystem, um Standardfunktionalitäten wie den Download von Software, den sicheren Speicherzugriff usw. zu gewährleisten. Benutzerspezifische Funktionserweiterungen, wie etwa ein softwareunterstütztes Lagerverwaltungssystem, spezielle, gewünschte Sicherheitsfunktionen oder eine an örtliche Bedürfnisse angepasste Warenverfolgung im Rahmen einer Lagerverwaltung, werden nach dem Stand der Technik über getrennte, externe Hardware wie Terminals, Microcontrollersteuerungen oder embedded PCs umgesetzt.

Nachteilig an diesem Stand der Technik ist, dass diese externen Systeme keinen oder eine nur sehr begrenzten Zugriff auf die Sensoren und Aktoren des Flurförderzeugs haben, um beispielsweise Messwerte zu erhalten, Informationen über Bewegungen der Fahr- oder Arbeitsfunktionen des Flurförderzeugs sowie Fahr- oder Arbeitsfunktionen des Flurförderzeugs automatisiert anzusteuern. Es entsteht daher erheblicher finanzieller und zeitlicher Aufwand, wenn solche benutzerspezifischen Funktionserweiterungen bei einem Flurförderzeug eingesetzt werden sollen, da eine spezifische Entwicklung und Anpassung von Seiten des Herstellers des Flurförderzeugs und/oder externer Dienstleister erforderlich wird. Selbst wenn entsprechende Daten und Informationen in einem Steuerungscomputer bzw. Bussystem des Flurförderzeugs bereits vorhanden sind, stehen diese für solche Funktionserweiterungen nicht zur Verfügung und es muss zum Teil sogar mit eigenen getrennte Sensoren und Erfassungsvorrichtungen gearbeitet werden.

Ein Ansatz zur Überwindung dieses Problems wäre, den direkten Zugriff auf die Fahrzeugsteuerung und über diesen Weg auf die Fahr- oder Betriebsfunktionen sowie die Fahrzeugdaten, insbesondere Sensordaten und Daten der Aktoren des Flurförderzeugs zu ermöglichen. Dabei würden Programme und Programmteile basierend auf Quellcode von Drittanbietern in die Programme von Fahrzeugsteuergeräten bzw. in die Fahrzeugsteuerung integriert und auf diesen laufen.

Nachteilig an diesem Stand der Technik ist, dass ein direkter Zugriff auf die Fahrzeugdaten bzw. das Betriebssystem der Fahrzeugsteuergeräte oder der Fahrzeugsteuerung rechtliche Probleme mit sich bringen kann, insbesondere Probleme bei der Erfüllung von Sicherheitsvorschriften und Gesetzen wie sie beispielsweise aus der Umsetzung der Maschinenrichtlinie der Europäischen Union resultieren, deren Einhaltung gewährleistet werden muss. Weiterhin ist ein solcher Zugriff aus elektrischen und technischen Gründen meist nicht sinnvoll oder möglich, da der Hersteller des Flurförderzeugs das technische Verhalten des Flurförderzeugs und den Energieverbrauch dann nicht gewährleisten kann. Auch ist ein solcher Zugriff aus Gründen des Schutzes des eigenen Know-hows zumeist nicht erwünscht.

Weil für benutzerspezifische Funktionserweiterungen folglich erheblicher Aufwand erforderlich ist, führt dies dazu, dass viele kleine Anwendungen für die Hersteller von Flurförderzeugen im Hinblick auf Kosten und Aufwand nicht rentabel und interessant sind, jedoch von Seiten der Kunden gewünscht werden, da durch diese die Attraktivität der Flurförderzeuge durch individuelle Anpassungen erhöht wird. Auch können diese benutzerspezifischen Funktionserweiterungen oftmals von vornherein nicht umgesetzt werden, wenn entsprechende Informationen und Steuerbefehle allein über die Fahrzeugsteuerung zugänglich sind und durch zusätzliche Sensoren bzw. zur Verfügung stehende Funktionsschnittstellen nicht darstellbar sind.

Weiterhin nachteilig ergibt sich das Problem, dass Zugriffe extern entwickelter Geräte und Vorrichtungen auf vorhandene Fahrzeugsteuerungsgeräte bzw. die Fahrzeugsteuerung nicht vollständig in ihrer Funktionalität überprüft werden können, so dass für benutzerspezifische Funktionserweiterungen im Regelfall eine kostenintensive grundsätzliche Aufrüstung des Flurförderzeugs einschließlich eines entsprechenden Entwicklungsprojekts durchgeführt werden muss.

Aus der US 5 890 086 A ist in gattungsgemäßen Verfahren bekannt.

Es ist daher Aufgabe der vorliegenden Erfindung, ein Verfahren zur Integration von Anwendungen in eine Steuerung eines Flurförderzeugs, ein entsprechendes Flurförderzeug sowie ein System zur Verfügung zu stellen, mit dem die oben genannten Nachteile vermieden werden und benutzerspezifische Funktionserweiterungen auf einfache und kostengünstige Art und Weise sowie sehr flexibel durchgeführt werden können.

Diese Aufgabe wird durch ein Verfahren zur Integration von Anwendungen in eine Steuerung eines Flurförderzeugs mit den Merkmalen des unabhängigen
Patentanspruchs 1, ein Flurförderzeug mit den Merkmalen des unabhängigen
Patentanspruchs 5 und ein System mit den Merkmalen des unabhängigen
Patentanspruchs 6 gelöst. Vorteilhafte Weiterbildungen der Erfindung sind in den Unteransprüchen angegeben.

Diese Aufgabe wird erfindungsgemäß dadurch gelöst, dass bei einem Verfahren zur Integration von mindestens einer Anwendung in eine Steuerung eines Flurförderzeugs, die mindestens einen Steuerungsrechner, der in Wirkverbindung mit Fahrfunktionen und/oder Arbeitsfunktionen und/oder Sensoren des Flurförderzeugs steht, und mindestens einen Anwendungsrechner aufweist, der Anwendungsrechner ein in den Steuerungsrechner integrierter virtueller Rechner und die Anwendung als Software in den Anwendungsrechner geladen wird und über definierte Schnittstellen des Anwendungsrechners mit dem Steuerungsrechner auf die mit dem Steuerungsrechner in Wirkverbindung stehenden Fahrfunktionen und/oder Arbeitsfunktionen und/oder Sensoren des Flurförderzeugs zugreift.

Indem die Anwendung nur für den Anwendungsrechner und dessen definierte Schnittstellen mit dem Steuerungsrechner programmiert wird, erfolgt kein direkter Eingriff in das Steuerungssystem des Flurförderzeugs durch die Anwendung. Dadurch ist es möglich, dass auch sehr kleine und spezifische Anwendungen entwickelt werden können, insbesondere durch dritte Personen, die nicht mit dem Hersteller des Flurförderzeugs zusammenarbeiten oder zu dessen Unternehmen gehören, da keine Integration in die eigentliche Steuerung des Flurförderzeugs erfolgen muss. Durch die strikte Trennung und den indirekten Zugriff über die definierten Schnittstellen können die rechtlichen Verpflichtungen zur Einhaltung gesetzlicher Vorschriften durch den Hersteller des Flurförderzeugs garantiert werden. Jeder Steuerbefehl, der indirekt über die definierte Schnittstelle auf die Fahr- und/oder Arbeitsfunktionen des Flurförderzeugs zugreift und somit in agierender Weise in das Fahrzeugverhalten eingreift, kann wie bei Eingaben einer Bedienperson den Kontrollfunktionen und Überwachungsfunktionen des Flurförderzeugs unterworfen werden und es können sicherheitskritische Zustände vermieden werden. Fahrfunktionen können dabei beispielsweise Befehle zur Vorwärts- oder Rückwärtsfahrt wie auch Lenkbefehle sein. Typische Arbeitsfunktionen sind beispielsweise die Ansteuerung eines Hubmastes, einer Neigevorrichtung oder einer Seitenschubeinrichtung für eine Lastgabel als Lasthandhabungsvorrichtung. Vorteilhaft kann der Hersteller eines Flurförderzeugs auch die Möglichkeit des Einsatzes von Anwendungen zur Verfügung stellen, ohne die Details der Fahrzeugsteuerung offen legen zu müssen. Dies ergibt einen effizienten Know-How-Schutz. Weiterhin können auch unerwünschte Eingriffe vermieden werden, die Energieverbrauchseigenschaften oder technische Eigenschaften des Flurförderzeugs negativ beeinflussen würden. Es ergibt sich auch als Vorteil, dass weiterhin das Flurförderzeug ein herstellerkonformes Fahrzeug ist und sich keine garantierechtlichen Probleme ergeben, wenn beispielsweise Drittanbieter benutzerspezifische Funktionserweiterungen durch eine Anwendung anbieten. Auch kann eine Beeinflussung der Form und des Designs des Arbeitsplatzes für eine Bedienperson auf dem Flurförderzeug festgelegt werden und durch die definierten Schnittstellen und von diesen zu Verfügung gestellten Befehle können Änderungen hieran auf ein erlaubtes Maß beschränkt werden. Externe Anbieter von Anwendungen können dann nur in diesem Rahmen beispielsweise die Gestaltung bestimmter Untermenüs in Displayanzeigen eines Armaturenbrettes indirekt über die Schnittstellen als Befehlsaufruf in dem Anwendungsrechner beeinflussen. Unter dem Steuerungsrechner des Flurförderzeugs ist auch eine Mehrzahl von Steuerungsrechnern oder Fahrzeugsteuergeräten für einzelne Komponenten, die über ein Bussystem, beispielsweise einem CAN-Bus, verbunden sind und in der Gesamtheit das Flurförderzeug steuern, zu verstehen. Vorteilhaft kann die Attraktivität der Flurförderzeuge durch eine umfangreiche Verbreiterung der Funktionalität bzw. massive Erweiterungen der Funktionalität erhöht werden. Dies ist insbesondere vorteilhaft möglich durch die Möglichkeit der Entwicklung durch externe Firmen und Drittanbieter auf der Basis der zur Verfügung gestellten Umgebung des Anwendungsrechners. Es wird eine flexible und schnelle Möglichkeit der Reaktion auf veränderte Anforderungen geboten, die durch die Programmierung von Anwendungen erfolgen kann. Insbesondere ergibt sich auch die Möglichkeit einer nachträglichen Erweiterung von Fahrzeugfunktionen durch späteres Integrieren einer Anwendung. Da die Installation von zusätzlicher Hardware, beispielsweise zusätzlichen Sensoren, durch das beschriebene Verfahren oftmals vermieden werden kann, ergibt sich auch ein Gewinn an Sicherheit und eine Verringerung der Komplexität mit deren potentiellen Fehlerquellen.

Steuerungsrechner weisen zum Teil erhebliche Rechenleistungen auf. Auch werden oft Steuerungsrechner eingesetzt, die vereinfachte Betriebssysteme oder bereits auf üblichen Betriebssystemen von Personal-Computern aufbauende Betriebssysteme einsetzen, wie beispielsweise das unter dem Markenamen Windows-CE bekannte Betriebssystem. Daher besteht oft bereits die Kapazität, auf einem Steuerungsrechner einen virtuellen Rechner mit einem entsprechenden Betriebssystem zur Verfügung zu stellen, durch den der Anwendungsrechner als virtueller Rechner emuliert werden kann.

Vorteilhaft bildet der Anwendungsrechner einen isolierten Bereich, innerhalb dem jedwede Maßnahme durch ein Programm keinerlei Auswirkung auf die äußere Umgebung hat.

Durch einen isolierten Bereich, auch in der Informatik bezeichnet als "Sandkiste" oder "Sandbox", innerhalb dem jedwede Maßnahme durch ein Programm keinerlei Auswirkung auf die äußere Umgebung hat, besteht eine vollständige Abkapselung. Zugriffe nach außen können dann nur über die definierten Schnittstellen und deren zur Verfügung gestellte Befehle erfolgen. Ein solcher gekapselter Bereich kann dennoch alle Möglichkeiten und Vorteile eines modernen, echtzeitfähigen multitaskingfähigen Betriebssystems bieten und ermöglicht es umgekehrt dennoch, alle Schnittstellen exakt zu überwachen und zu kontrollieren. Insbesondere für Zugriffe auf die Fahrfunktionen oder die Arbeitsfunktionen kann eine zuverlässige und genaue Überwachung erfolgen. Dadurch können die Entwicklungskosten für benutzerspezifische Funktionserweiterungen über das Konzept der beschriebenen Anwendungen vorteilhaft reduziert werden.

In einer Ausgestaltung der Erfindung läuft die Anwendung in einer speichersicheren Umgebung des Anwendungsrechners mit niedriger Priorität.

Dies ergibt die vorteilhafte Möglichkeit, dass die Systemumgebung des Steuerungsrechners des Flurförderzeugs jederzeit die Anwendungen in dem Anwendungsrechner unterbrechen kann. Im Falle eines Softwarefehlers bzw. Programmfehlers in der Anwendung wirkt sich dieser durch die Kontrollmöglichkeit nicht oder nur sehr eingeschränkt auf die Fahrzeugsteuerung und die Arbeitsfunktionen, Fahrfunktionen sowie Sensoren des Flurförderzeugs aus.

Es ist möglich, dass die Anwendung über die definierten Schnittstellen des Abwendungsrechners nur auf Sensoren und/oder Dateninformationen der Fahrfunktionen und/oder Dateninformationen der Arbeitsfunktionen des Flurförderzeugs zugreift.

Vorteilhaft ist es dadurch möglich, die auf dem Anwendungsrechner laufenden Anwendungen zu klassifizieren und Ihnen unterschiedliche Niveaus des Zugriffs auf die definierten Schnittstellen und über diese auf die Funktionen des Flurförderzeugs zu ermöglichen. Dabei kann zum einen nur ein informeller Zugriff auf das Flurförderzeug erlaubt werden, bei dem allein Fahrzeuginformationen zugänglich sind, wie die Sensoren, die Dateninformationen der Fahrfunktionen, oder die Dateninformationen der Arbeitsfunktionen des Flurförderzeugs. Dabei sind die Dateninformationen der Arbeitsfunktionen oder der Fahrfunktionen des Flurförderzeugs beispielsweise berechnete Werte einer zurückgelegten Fahrstrecke, basierend auf den Fahrbefehlen, oder eine berechnete Hubhöhe für die Arbeitsfunktion eines Hubmastes, die aus den Hubbefehlen berechnet wird.

Die Aufgabe wird auch gelöst durch ein Flurförderzeug mit mindestens einen Steuerungsrechner, der in Wirkverbindung mit Fahrfunktionen und/oder Arbeitsfunktionen und/oder Sensoren des Flurförderzeugs steht, und mindestens einem Anwendungsrechner, der ein in den Steuerungsrechner integrierter virtueller Rechner ist und über definierte Schnittstellen mit dem Steuerungsrechner auf die mit dem Steuerungsrechner in Wirkverbindung stehenden Fahrfunktionen und/oder Arbeitsfunktionen und/oder Sensoren des Flurförderzeugs zugreift, wobei der mindestens eine Anwendungsrechner ein zuvor beschriebenes Verfahren durchführt.

Das Flurförderzeug weißt die bereits zuvor geschilderten Vorteile auf.

Weiterhin wird die Aufgabe auch gelöst durch ein System, das eine Mehrzahl von Flurförderzeugen, wie es zuvor beschrieben wurde, sowie mindestens einen Server und ein Netzwerk umfasst, wobei die Flurförderzeuge über das Netzwerk mit dem Server verbindbar sind und von dem Server Anwendungen herunter geladen werden können.

Dadurch können die Anwendungen durch den Hersteller des Flurförderzeugs kontrolliert werden und es kann beispielsweise die zuvor beschriebene Klassifizierung, beispielsweis zwischen einem agierenden Zugriff oder einem rein informellen Zugriff auf das Fahrzeug durchgeführt werden. Gleichzeitig besteht eine günstige und komfortable Möglichkeit der Verteilung der Anwendungen auf die Flurförderzeuge. Ein solcher Server kann im Sinne eines Marktplatzes gestaltet werden, auf dem die Anwendungen käuflich erworben werden können.

In einer günstigen Ausgestaltung ist das Netzwerk das Internet.

In einer vorteilhaften Weiterbildung des Systems können über das Netzwerk durch Dritte Anwendungen auf dem Server bereitgestellt werden.

Durch die Gestaltung des Servers als offener Marktplatz kann auch eine entwickelte Anwendung durch einen Dritten auf dem Server zur Verfügung gestellt werden, wobei vorteilhaft die Möglichkeit der Kontrolle und Überprüfung der Konformität der Anwendung mit vorhandenen Vorgaben besteht. Beispielsweise ist es möglich, bestimmte Berechtigungsstufen für die Anwendungen zu definieren und diese mit unterschiedlichen Vorgaben in Bezug auf die Anforderungen an die Programmierung wie auch die Überprüfung der Anwendungen zu versehen. So könnte in einem dreistufigen Konzept beispielsweise in einer ersten Stufe die Nutzung der von dem Hersteller des Flurförderzeugs spezifizierten Hardware bzw. des Anwendungsrechners und vorgegebener Software zugelassen werden. In einer zweiten Stufe könnte die Nutzung der von dem Fahrzeughersteller bzw. Hersteller des Flurförderzeugs kontrollierten und überwachten Fahrzeuginformationen, der zuvor geschilderten Sensoren sowie Dateninformationen der Fahrfunktionen bzw. Dateninformationen der Arbeitsfunktionen zugelassen werden. Hierfür kann beispielsweise ein Freigabeverfahren mit einer Info an den Hersteller des Flurförderzeugs verlangt werden mit einer durch diesen zu erteilenden Freigabe. Dies kann beispielsweise auch automatisiert erfolgen. Schließlich kann in einer dritten Stufe bei einer weitergehenden Nutzung insbesondere einer aktiven Nutzung der Fahrfunktionen und/oder Arbeitsfunktionen eine Einzelfallzertifizierung durch den Hersteller des Flurförderzeugs gefordert werden.

Vorteilhaft ist ein Laden der Anwendung in den Anwendungsrechner nur über das Netzwerk von dem Server möglich, was durch Verschlüsselungen, Kodierungen oder Zertifizierungen der Anwendungen sichergestellt wird.

Dadurch kann sichergestellt werden, dass keine unzulässige Software auf dem Anwendungsrechner gestartet werden kann. In dem beispielsweise Einladen von Software grundsätzlich nur über das Netzwerk möglich ist und keine sonstige Schnittstelle wie etwa ein Datenzugang oder ein Laufwerk vorhanden ist, kann effizient sichergestellt werden, dass nur kontrollierte und den Bedingungen entsprechende Anwendungen auf dem Anwendungsrechner laufen können. Es ist denkbar dies auch durch entsprechende Verschlüsselungen, Kodierungen oder Zertifizierungen der Anwendungen sicherzustellen.

Es ist auch denkbar, auf dem Anwendungsrechner Anwendungen bzw. Software laufen zu lassen, die auch parallel für einen Einsatz auf Terminals oder sonstigen Computern geeignet sind. Diese gibt die Möglichkeit, dass ein Benutzer des Flurförderzeugs integriert in dem Flurförderzeug als auch auf von dem Flurförderzeug getrennten Terminals, etwa PDAs, Smartphones, Notebooks oder sonstigen Computern die

Funktionen dieser Software bzw. Anwendung nutzen kann.

Weitere Vorteile und Einzelheiten der Erfindung werden anhand des in den schematischen Figuren dargestellten Ausführungsbeispiels näher erläutert. Hierbei zeigt
- Fig. 1: schematisch den Aufbau des erfindungsgemäßen Verfahrens und
- Fig. 2: schematisch ein erfindungsgemäßes System.

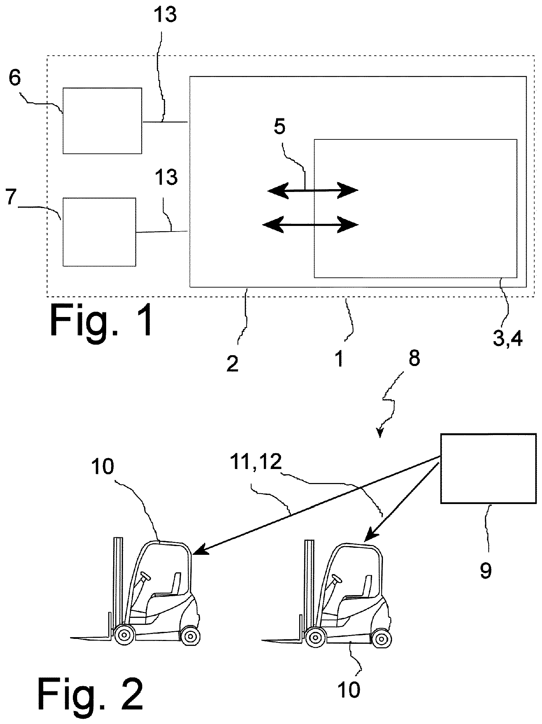

Die Fig. 1 zeigt schematisch den Aufbau des erfindungsgemäßen Verfahrens. Ein Flurförderzeug 1 weist einen Steuerungsrechner 2 auf, der als virtuellen Rechner 3 einen Anwendungsrechner 4 umfasst. Über definierte Schnittstellen 5 kann eine auf dem Anwendungsrechner 4 laufende Anwendung Fahr- und Arbeitsfunktionen 6 als Aktoren und Sensoren 7 des Flurförderzeugs 1 ansprechen und abhängig von einem für die Anwendung erlaubten Zugriffsniveau den Fahr- und Arbeitsfunktionen 6 Steuerbefehle übermitteln, beispielsweise auch als CAN-Botschaft über einen CAN-Bus 13, oder auch nur Messwerte der Sensoren 7 bzw. eventuell Dateninformationen der Fahr-und Arbeitsfunktionen 6 abfragen.

Die Fig. 2 zeigt schematisch ein erfindungsgemäßes System 8, das einen Server 9 aufweist und zwei Gabelstapler 10 als Beispiel eines Flurförderzeugs 1. Die Gabelstapler 10 weisen entsprechend der Beschreibung in Fig. 1 einen Anwendungsrechner 4 auf. Wie durch die Pfeile verdeutlicht, kann über ein Netzwerk 11, beispielsweise das Internet 12, eine Anwendung von dem Server 9 in den Anwendungsrechner 4 herunter geladen werden.

Dadurch kann sichergestellt werden, dass nur Anwendungen auf dem Anwendungsrechner 4 der Gabelstapler 10 laufen können, die den Vorgaben entsprechen. Dies lässt sich in dem Server 9 beim zur Verfügung stellen der Anwendung überprüfen. Je nach Stufe der erlaubten Nutzung kann dabei eine individuelle Prüfung oder eine automatisierte formelle Prüfung erfolgen.

## Patentansprüche

1. Verfahren zur Integration von mindestens einer Anwendung in eine Steuerung eines Flurförderzeugs (1), die mindestens einen Steuerungsrechner (2), der in Wirkverbindung mit Fahrfunktionen (6) und/oder Arbeitsfunktionen (6) und/oder Sensoren (7) des Flurförderzeugs (1) steht, und mindestens einen Anwendungsrechner (4) aufweist,
**dadurch gekennzeichnet,**
**dass** der Anwendungsrechner (4) ein in den Steuerungsrechner (2) integrierter virtueller Rechner (3) ist und dass die Anwendung als Software in den Anwendungsrechner (4) geladen wird und über definierte Schnittstellen (5) des Anwendungsrechners (4) mit dem Steuerungsrechner (2) auf die mit dem Steuerungsrechner (2) in Wirkverbindung stehenden Fahrfunktionen (6) und/oder Arbeitsfunktionen (6) und/oder Sensoren (7) des Flurförderzeugs (1) zugreift,

2. Verfahren nach Anspruch 1,
**dadurch gekennzeichnet,**
**dass** der Anwendungsrechner (4) einen isolierten Bereich bildet, innerhalb dem jedwede Maßnahme durch ein Programm keinerlei Auswirkung auf die äußere Umgebung hat.

3. Verfahren nach Anspruch 1 oder 2,
**dadurch gekennzeichnet,**
**dass** die Anwendung in einer speichersicheren Umgebung des Anwendungsrechners (4) mit niedriger Priorität läuft.

4. Verfahren nach einem der Ansprüche 1 bis 3,
**dadurch gekennzeichnet,**
**dass** die Anwendung über die definierten Schnittstellen (5) des Anwendungsrechners (4) nur auf Sensoren (7) und/oder Dateninformationen der Fahrfunktionen (6) und/oder Dateninformationen der Arbeitsfunktionen (6) des Flurförderzeugs (1) zugreift.

5. Flurförderzeug mit mindestens einem Steuerungsrechner (2), der in Wirkverbindung mit Fahrfunktionen (6) und/oder Arbeitsfunktionen (6) und/oder Sensoren (7) des Flurförderzeugs (1) steht, und mindestens einem Anwendungsrechner (4), der ein in den Steuerungsrechner (2) integrierter virtueller Rechner (3) ist und über definierte Schnittstellen (5) mit dem Steuerungsrechner (2) auf die mit dem Steuerungsrechner (2) in Wirkverbindung stehenden Fahrfunktionen (6) und/oder Arbeitsfunktionen (6) und/oder Sensoren (7) des Flurförderzeugs zugreift, wobei der mindestens eine Anwendungsrechner (4) ein Verfahren nach einem der vorhergehenden Ansprüche durchführt.

6. System, das eine Mehrzahl von Flurförderzeugen (1) nach Anspruch 5 sowie mindestens einen Server (9) und ein Netzwerk (11) umfasst, wobei die Flurförderzeuge (1) über das Netzwerk (11) mit dem Server (9) verbindbar sind und von dem Server (9) Anwendungen herunter geladen werden können.

7. System nach Anspruch 8,
**dadurch gekennzeichnet,**
**dass** das Netzwerk (11) das Internet (12) ist.

8. System nach Anspruch 6 oder 7,
**dadurch gekennzeichnet,**
**dass** über das Netzwerk (11) durch Dritte Anwendungen auf dem Server (9) bereitgestellt werden können.

9. System nach einem der Ansprüche 6 bis 8,
**dadurch gekennzeichnet,**
**dass** ein Laden der Anwendung in den Anwendungsrechner (4) nur über das Netzwerk (11) von dem Server (9) möglich ist, was durch eine Verschlüsselung, Kodierung oder Zertifizierung der Anwendung sichergestellt wird.

## Claims

1. Method for integrating at least one application into a control system of an industrial truck (1) which has at least one control computer (2), which is operatively connected to driving functions (6) and/or working functions (6) and/or sensors (7) of the industrial truck (1), and at least one application computer (4),
**characterized**
**in that** the application computer (4) is a virtual computer (3) integrated into the control computer (2), and in that the application is loaded as software into the application computer (4) and accesses the driving functions (6) and/or working functions (6) and/or sensors (7) of the industrial truck (1) operatively connected to the control computer (2) via defined interfaces (5) of the application computer (4) with the control computer (2) .

2. Method according to Claim 1,
**characterized**
**in that** the application computer (4) forms an isolated area inside which any measure by a program has no effect whatsoever on the external environment.

3. Method according to Claim 1 or 2,
**characterized**
**in that** the application runs with low priority in a secure memory environment of the application computer (4).

4. Method according to one of Claims 1 to 3,
**characterized**
**in that** the application accesses only sensors (7) and/or data information of the driving functions (6) and/or data information of the working functions (6) of the industrial truck (1) via the defined interfaces (5) of the application computer (4) .

5. Industrial truck having at least one control computer (2), which is operatively connected to driving functions (6) and/or working functions (6) and/or sensors (7) of the industrial truck (1), and at least one application computer (4) which is a virtual computer (3) integrated into the control computer (2) and accesses the driving functions (6) and/or working functions (6) and/or sensors (7) of the industrial truck via defined interfaces (5) with the control computer (2), the at least one application computer (4) carrying out a method according to one of the preceding claims.

6. System which comprises a plurality of industrial trucks (1) according to Claim 5 and at least one server (9) and a network (11), the industrial trucks (1) being able to be connected to the server (9) via the network (11) and applications being able to be downloaded from the server (9).

7. System according to Claim 8,
**characterized**
**in that** the network (11) is the Internet (12).

8. System according to Claim 6 or 7,
**characterized**
**in that** applications can be provided on the server (9) by third parties via the network (11).

9. System according to one of Claims 6 to 8,
**characterized**
**in that** the application can be loaded into the application computer (4) from the server (9) only via the network (11), which is ensured by means of encryption, coding or certification of the application.

## Revendications

1. Procédé d'intégration d'au moins une application dans une unité de commande d'un chariot de manutention (1), qui comporte au moins un calculateur de commande (2) en liaison fonctionnelle avec des fonctions de conduite (6) et/ou des fonctions de travail (6) et/ou des capteurs (7) du chariot de manutention (1), et au moins un calculateur d'application (4),
**caractérisé en ce que** le calculateur d'application (4) est un calculateur virtuel (3) intégré au calculateur de commande (2) et **en ce que** l'application est chargée dans le calculateur d'application (4) en tant que logiciel et accède au moyen du calculateur de commande (2) à des fonctions de conduite (6) et/ou à des fonctions de travail (6) et/ou à des capteurs (7) du chariot de manutention (1) qui sont en liaison fonctionnelle avec le calculateur de commande (2) par l'intermédiaire d'interfaces définies (5) du calculateur d'application(4) .

2. Procédé selon la revendication 1,
**caractérisé en ce que** le calculateur d'application (4) forme un domaine isolé à l'intérieur duquel aucune des actions effectuées par un programme n'a d'effet sur l'environnement extérieur.

3. Procédé selon la revendication 1 ou 2, **caractérisé en ce que** l'application s'exécute avec une faible priorité dans un environnement à mémoire sécurisée du calculateur d'application (4).

4. Procédé selon l'une quelconque des revendications 1 à 3,
**caractérisé en ce que** l'application accède uniquement, par l'intermédiaire des interfaces définies (5) du calculateur d'application (4), à des capteurs (7) et/ou à des informations de données des fonctions de conduite (6) et/ou à des informations de données des fonctions de travail (6) du chariot de manutention (1).

5. Chariot de manutention comportant au moins un calculateur de commande (2) qui est en liaison fonctionnelle avec des fonctions de conduite (6) et/ou avec des fonctions de travail (6) et/ou avec des capteurs (7) du chariot de manutention (1), et au moins un calculateur d'application (4) qui est un calculateur virtuel (3) intégré au calculateur de commande (2) et accède au moyen du calculateur de commande (2) par l'intermédiaire d'interfaces définies (5) à des fonctions de conduite (6) et/ou à des fonctions de travail (6) et/ou à des capteurs (7) du chariot de manutention, qui sont en liaison fonctionnelle avec le calculateur de commande (2), dans lequel l'au moins un calculateur d'application (4) met en oeuvre un procédé selon l'une quelconque des revendications précédentes.

6. Système comprenant une pluralité de chariots de manutention (1) selon la revendication 5 ainsi qu'au moins un serveur (9) et un réseau (11), dans lequel les chariots de manutention (1) peuvent être reliés au serveur (9) par l'intermédiaire du réseau (11) et dans lequel des applications peuvent être téléchargées depuis le serveur (9).

7. Système selon la revendication 8,
**caractérisé en ce que** le réseau (11) est l'Internet (12).

8. Système selon la revendication 6 ou 7,
**caractérisé en ce que** des applications peuvent être mises à disposition par des tiers sur le serveur (9) par l'intermédiaire du réseau (11).

9. Système selon l'une quelconque des revendications 6 à 8,
**caractérisé en ce qu'**un chargement par le serveur (9) de l'application sur le calculateur d'application (4) n'est possible que par l'intermédiaire du réseau (11), ledit chargement étant sécurisé par un chiffrement, un codage ou une certification de l'application.
